# FASCICULE DE BREVET EUROPEEN

(11) **EP 2 642 695 B1**
(45) Date de publication et mention de la délivrance du brevet: **15.10.2014**
(21) Numéro de dépôt: 13160157.7
(22) Date de dépôt: 20.03.2013
(51) Int. Cl.: H04L 12/28, H04L 12/24

(54) **Equipement de terminaison optique beneficiant d'une double supervision tr-069/ocmi et methode de supervision correspondante**
Optische Abschlusseinheit, die über eine doppelte TR-069/OCMI-Überwachung verfügt, und entsprechende Überwachungsmethode
Optical termination equipment provided with dual TR-069/OMCI supervision and corresponding supervision method

(30) Priorité: 20.03.2012 FR 1252496
(43) Date de publication de la demande: 25.09.2013
(73) Titulaire: Bouygues Telecom, 75116 Paris (FR)
(72) Inventeur: Delpy, Xavier, 91400 Saclay (FR); Toullelan, Thierry, 35520 Melesse (FR)
(74) Mandataire: Regimbeau

(56) Documents cités:
- EP-A1- 2 161 943
- US-A1- 2009 024 725
- US-A1- 2011 276 668
- Broadband Forum: "TR-142 Framework for TR-069 enabled PON devices", , 1 février 2010 (2010-02-01), pages 1-18, XP007921538, Extrait de l'Internet: URL:http://www.broadband-forum.org/technic al/download/TR-142_Issue-2.pdf [extrait le 2013-02-07]
- GAVIN YOUNG: "LS: Respective Domains of Responsibilities of TR-069 and OMCI;TD 364 (WP 1/15)", ITU-T DRAFTS ; STUDY PERIOD 2005-2008, INTERNATIONAL TELECOMMUNICATION UNION, GENEVA ; CH, vol. Study Group 15 ; 2/15, 13 octobre 2008 (2008-10-13), pages 1-4, XP017527377,
- J-I KANI ET AL: "Next-generation PON-part I: Technology roadmap and general requirements", IEEE COMMUNICATIONS MAGAZINE, IEEE SERVICE CENTER, PISCATAWAY, US, vol. 47, no. 11, 1 novembre 2009 (2009-11-01), pages 43-49, XP011284153, ISSN: 0163-6804, DOI: 10.1109/MCOM.2009.5307465

## Description

### DOMAINE TECHNIQUE GENERAL

L'invention concerne l'administration à distance des équipements des réseaux optiques passifs (en anglais, « *Passive Optical Network* », PON).

### ETAT DE LA TECHNIQUE

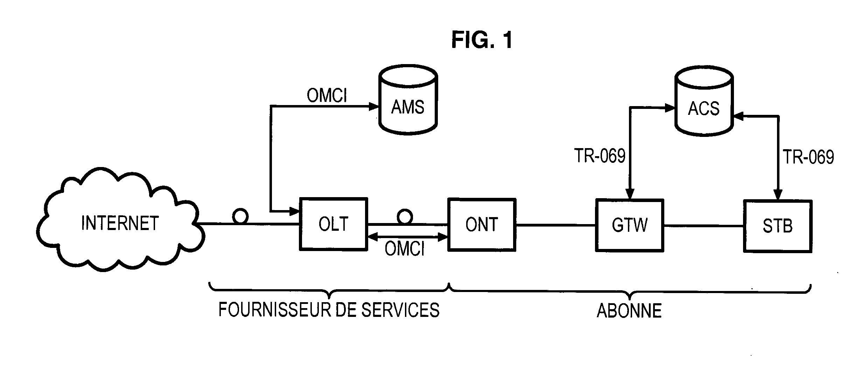

En référence à la figure 1, un réseau du type fibre optique jusqu'à la maison (en anglais, « *Fiber To The Home* », (FTTH)) est traditionnellement composé d'un coeur en fibre optique et de liens vers des abonnés fibre optique.

Des équipements de terminaisons optiques appelés ONT (en anglais, « *Optical Network Termination* ») disposés chez l'abonné sont reliés via des fibres optiques à un équipement optique central appelé OLT (en anglais, « *Optical Line Termination* »). L'équipement central OLT est lui connecté au réseau Internet.

Un réseau FTTH comprend bien entendu plusieurs OLTs et plusieurs ONTs.

Pour accéder aux services, l'abonné dispose d'un boitier d'accès à Internet (en anglais, « *Set Top Box* », (STB)) connecté à une terminaison optique ONT via une passerelle (en anglais, « Gateway », (GTW)).
La connexion entre la passerelle GTW et l'équipement ONT n'est pas effectuée par l'intermédiaire de la fibre optique mais par un câble en cuivre (typiquement un câble Ethernet (paires torsadées) de catégorie 5E minimum avec un connecteur RJ45 à chaque extrémité)

Tous les équipements listés ci-dessus sont administrés à distance. Ainsi, l'OLT et les ONTs sont administrés par un serveur d'administration du réseau (en anglais, « *Access Management System* », (AMS)) dédié au réseau FTTH tandis que les équipements mis à disposition de l'abonné sont administrés à distance via un serveur de configuration (en anglais, « *Auto-Configuration Server* », (ACS)) maintenu par le fournisseur de services.

Chaque serveur utilise un protocole de communication qui lui est propre : le serveur ACS utilise le protocole TR-069 et le serveur AMS utilise le protocole OMCI (protocole spécifié dans la recommandation G.984.4 de l'Union Internationale des Télécommunications).

Un problème est que les deux serveurs d'administration ACS, AMS ne communiquent pas entre eux. En outre, l'ACS et l'AMS sont gérés par deux entités différentes. L'AMS est ainsi typiquement sous le contrôle des équipes réseau du fournisseur d'accès à Internet. Ceci est toutefois préjudiciable aux équipes de conseillers de clientèle du fournisseur d'accès à internet qui auraient besoin d'avoir accès à la totalité des informations sur l'état et la configuration des équipements présents chez l'abonné, notamment l'ONT. Il s'agit notamment d'informations souhaitables en cas de panne, qui ne peuvent aujourd'hui être remontées puisque le conseiller de clientèle n'a aucune vue sur l'ONT. Si, par exemple, le câble Ethernet entre l'ONT et la GTW n'est pas connecté, le conseiller de clientèle ne pourra pas le savoir. Il ne recevra d'ailleurs plus les informations de la GTW dont le lien WAN (acronyme de « Wide Area Network » désignant un réseau étendu) n'est plus actif.

Un autre problème est que le protocole OMCI permet essentiellement une supervision des fonctionnalités de niveau 1 et 2 (couche physique / couche de liaison de données) de l'ONT, mais pas ou peu celles de niveau 3 (couche réseau).

Le Broadband Forum, notamment dans sa spécification TR-142 (issue 2 de Février 2010) propose de son côté une évolution de la gestion des ONT par TR-069. Il s'agit en réalité d'ONT intégrant des fonctionnalités de GTW et dont la partie ONT proprement dite reste supervisée par OMCI.

On notera que la seule référence aux paramètres relatifs au réseau optique passif auxquels un accès en lecture seule pourrait être réalisé par TR-069 fait état de ce que ces paramètres ne sont pas définis par la spécification TR-98 Amendment 2.

Par ailleurs, si cette solution semble être préconisée lorsque les fonctionnalités ONT et GTW sont combinées sur un seul dispositif physique (soit sur un seul circuit doté d'un microprocesseur pour chacune des fonctionnalités, soit sur un seul circuit doté d'un seul microprocesseur pour mettre en oeuvre les deux fonctionnalités), il semble plus difficile de la mettre en oeuvre pour des dispositifs autonomes physiquement séparés, notamment lorsqu'ils proviennent de fabricants différents.

Cette solution (voir notamment la figure 5 de la spécification TR-142) semble par ailleurs ignorer le fait que OMCI et TR-156 nécessitent l'utilisation d'une forme de pont de niveau 2 dans la fonction ONT si des VLAN (acronyme de Virtual Local Area Network désignant un réseau local virtuel) sont utilisés dans le réseau de distribution optique. Elle apparaît en outre en contradiction avec la recommandation G.984.4 de l'ITU (voir notamment le paragraphe II.2 de cette recommandation).

Enfin, pour des dispositifs autonomes, cette solution ignore des problématiques de sécurité (par exemple le fait qu'un utilisateur malveillant vienne connecter un appareil autre que la GTW au port physique d'interface utilisateur-réseau de l'ONT) ou le fait que des fonctionnalités de niveau 3 puissent s'avérer nécessaires (par exemple le réseau domestique peut être configuré de telle manière qu'un filtrage spécifique, non couvert par OMCI/TR-156, devrait être mis en place au niveau de l'interface utilisateur-réseau de l'ONT).

### PRESENTATION DE L'INVENTION

L'invention a pour objectif de proposer un système de communication intégrant un équipement optique de terminaison ONT physiquement séparé de la passerelle GTW connectée au port physique d'interface utilisateur-réseau de l'ONT qui passe outre l'un et/ou l'autre des inconvénients précédemment relevés.

A cet effet, l'invention propose selon un premier aspect un système de communication comprenant un équipement de terminaison optique d'un réseau fibre optique jusqu'à la maison, un boitier d'accès à Internet connecté à l'équipement de terminaison optique par l'intermédiaire d'une passerelle reliée à un port physique d'interface utilisateur-réseau de l'équipement de terminaison optique, l'équipement de terminaison optique et la passerelle formant deux dispositifs autonomes, le système comprenant en outre un serveur de configuration adapté pour réaliser une supervision de la passerelle selon le protocole TR-069 le long d'un premier chemin de configuration, où l'équipement de terminaison optique intègre une interface utilisateur-réseau virtuelle délimitant deux domaines de responsabilité, le premier domaine de responsabilité étant sous supervision d'un serveur d'administration du réseau selon le protocole OMCI, et le second domaine de responsabilité étant sous supervision du serveur de configuration selon le protocole TR-069 le long d'un second chemin de configuration
le système étant caractérisé en ce que le serveur de configuration est adapté pour réaliser une mise à jour logicielle de l'équipement de terminaison optique selon le protocole TR-069 le long du second chemin de configuration.

D'autres aspects de ce système sont les suivants :
- l'interface utilisateur-réseau virtuelle de l'équipement de terminaison optique est un point d'interface Ethernet virtuel ;
- le serveur de configuration est configuré pour superviser la mise en oeuvre d'un filtrage du trafic IP de type broadcast entrant au niveau du port physique d'interface utilisateur-réseau de l'équipement de terminaison optique.
- le serveur de configuration est configuré pour superviser la mise en oeuvre d'un filtrage exploitant une liste de contrôle d'accès au niveau du port physique d'interface utilisateur-réseau de l'équipement de terminaison optique.
- l'équipement de terminaison optique et la passerelle forment deux dispositifs physiquement séparés.
- l'équipement de terminaison optique et la passerelle forment deux dispositifs autonomes agencés sur une même carte de circuit imprimé.

Selon un autre aspect, l'invention concerne un procédé de supervision d'un système de communication selon son premier aspect.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 déjà discutée précédemment représente un réseau fibre optique jusqu'à la maison FTTH ;
- la figure 2 est un schéma illustrant un système de communication conforme à un mode de réalisation possible de l'invention.

### DESCRIPTION DETAILLEE D'UN MODE DE REALISATION POSSIBLE DE L'INVENTION

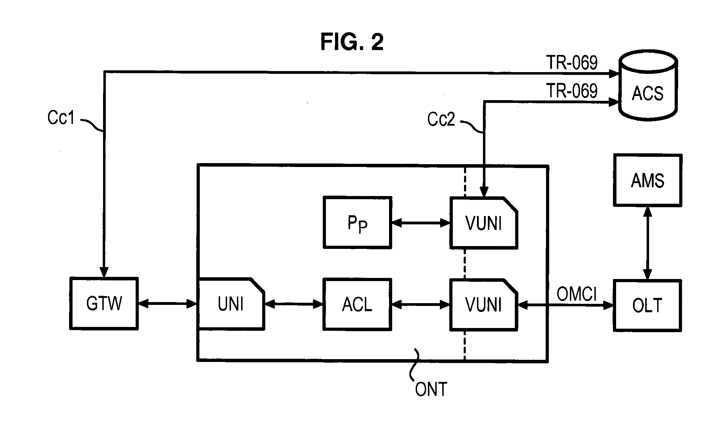

En référence à la figure 2, l'invention propose selon son premier aspect un système de communication comprenant un équipement de terminaison optique ONT d'un réseau fibre optique jusqu'à la maison FTTH, un boitier d'accès à Internet connecté à l'équipement de terminaison optique par l'intermédiaire d'une passerelle GTW reliée à un port physique d'interface utilisateur-réseau UNI (*User-Network Interface*) de l'équipement de terminaison optique ONT. On comprend donc que l'équipement de terminaison optique ONT et la passerelle GTW forment deux dispositifs autonomes. Selon un premier mode de réalisation possible, l'équipement de terminaison optique ONT et la passerelle GTW forment deux dispositifs physiquement séparés. En variante, l'équipement de terminaison optique ONT et la passerelle GTW sont deux dispositifs autonomes agencés sur une même carte de circuit imprimé, chacun disposant de son propre microprocesseur.

Le système de communication comprend en outre un serveur de configuration ACS adapté pour réaliser de manière classiquement connue en soi une supervision de la passerelle GTW selon le protocole TR-069 le long d'un premier chemin de configuration Cc1.

L'invention propose que l'équipement de terminaison optique ONT intègre une interface utilisateur-réseau virtuelle vUNI délimitant deux domaines de responsabilité, le premier domaine de responsabilité étant sous supervision d'un serveur d'administration du réseau AMS, via un équipement optique central appelé OLT ( « *Optical Line Termination* »), selon le protocole OMCI, et le second domaine de responsabilité étant sous supervision du serveur de configuration ACS selon le protocole TR-069 le long d'un second chemin de configuration Cc2.

L'interface utilisateur-réseau virtuelle de l'équipement de terminaison optique est par exemple un point d'interface Ethernet virtuel VEIP (*Virtual Ethernet Interconnection Point*) tel que défini dans la norme OMCI. La notion d'interface VEIP est déjà existante dans la norme G988 pour véhiculer les flux tel que la Voix sur IP. Cette fonctionnalité est réutilisée dans le cadre de l'invention pour affecter à l'ONT une ressource IP qui permet de l'administrer selon le protocole TR-069 (une pile protocolaire standard de type TR-069 étant pour cela intégrée au sein de l'ONT ; cette pile porte la référence Pp sur la figure 2).

On a vu précédemment que la spécification TR-142 du Broadband Forum visait des ONT intégrant des fonctionnalités de GTW et dont la partie ONT proprement dite restait supervisée par OMCI. Contrairement à cette spécification, l'invention propose, non pas un seul chemin de configuration ACS, mais un chemin de configuration ACS en TR-069 pour chacun des équipements présents chez l'abonné, à savoir le premier chemin de configuration Cc1 pour la passerelle GTW et le second chemin de configuration Cc2 pour l'équipement de terminaison optique ONT. Par ailleurs, l'invention propose une véritable double supervision d'un ONT autonome à la fois par OMCI et par TR-069. Les conseillers de clientèle ont ainsi une visibilité sur chacun des équipements présents chez l'abonné : ONT et GTW.

Le serveur de configuration ACS peut par ailleurs être adapté pour réaliser une mise à jour logicielle de l'équipement de terminaison optique ONT selon le protocole TR-069 le long du second chemin de configuration Cc2. Ceci permet de décorréler les évolutions logicielles entre les OLT et les ONT et donc de gagner en souplesse en environnement multi-vendeurs

Le serveur de configuration ACS peut également être configuré pour permettre d'offrir à l'ONT des fonctionnalités qui ne sont pas supportées en OMCI/TR-156.

Le serveur de configuration ACS peut également être configuré pour superviser la mise en oeuvre d'un filtrage exploitant une liste de contrôle d'accès ACL (*Access Control* List) au niveau du port physique d'interface utilisateur-réseau UNI de l'équipement de terminaison optique, notamment un filtrage sur les couches supérieures à la couche 2. Par exemple, l'ONT peut-être configuré par TR-069 par le serveur de configuration ACS pour superviser la mise en oeuvre d'un filtrage du trafic IP de type broadcast. A titre d'exemple, un filtrage systématique de tout le trafic broadcast autre que ARP (« Address resolution protocol » pour protocole de résolution d'adresse) et DHCP (« Dynamic Host Configuration Protocol » pour protocole de configuration dynamique des hôtes) peut ainsi être mis en oeuvre au niveau du port physique d'interface RJ45 utilisateur-réseau UNI de l'équipement de terminaison optique ONT.

## Revendications

1. Système de communication comprenant un équipement de terminaison optique (ONT) d'un réseau fibre optique jusqu'à la maison, un boitier d'accès à Internet connecté à l'équipement de terminaison optique par l'intermédiaire d'une passerelle (GTW) reliée à un port physique d'interface utilisateur-réseau (UNI) de l'équipement de terminaison optique, l'équipement de terminaison optique et la passerelle formant deux dispositifs autonomes, le système comprenant en outre un serveur de configuration (ACS) adapté pour réaliser une supervision de la passerelle (GTW) selon le protocole TR-069 le long d'un premier chemin de configuration (Cc1),
dans lequel l'équipement de terminaison optique (ONT) intègre une interface utilisateur-réseau virtuelle (vUNI) délimitant deux domaines de responsabilité, le premier domaine de responsabilité étant sous supervision d'un serveur d'administration du réseau (AMS) selon le protocole OMCI, et le second domaine de responsabilité étant sous supervision du serveur de configuration (ACS) selon le protocole TR-069 le long d'un second chemin de configuration (Cc2), le système étant **caractérisé en ce que** le serveur de configuration (ACS) est adapté pour réaliser une mise à jour logicielle de l'équipement de terminaison optique (ONT) selon le protocole TR-069 le long du second chemin de configuration (Cc2).

2. Système selon la revendication 1, dans lequel l'interface utilisateur-réseau virtuelle de l'équipement de terminaison optique est un point d'interface Ethernet virtuel.

3. Système selon l'une des revendications précédentes, dans lequel le serveur de configuration (ACS) est configuré pour superviser la mise en oeuvre d'un filtrage du trafic IP de type broadcast entrant au niveau du port physique d'interface utilisateur-réseau de l'équipement de terminaison optique.

4. Système selon l'une des revendications précédentes, dans lequel le serveur de configuration (ACS) est configuré pour superviser la mise en oeuvre d'un filtrage exploitant une liste de contrôle d'accès (ACL) au niveau du port physique d'interface utilisateur-réseau (UNI) de l'équipement de terminaison optique.

5. Système selon l'une des revendications 1 à 4, dans lequel l'équipement de terminaison optique et la passerelle forment deux dispositifs physiquement séparés.

6. Système selon l'une des revendications 1 à 4, dans lequel l'équipement de terminaison optique et la passerelle forment deux dispositifs autonomes agencés sur une même carte de circuit imprimé.

7. Procédé de supervision d'un système de communication selon l'une des revendications précédentes.

## Patentansprüche

1. Kommunikationssystem mit einer optischen Netzabschlusseinrichtung (ONT) eines Glasfasernetz-Hausanschlusses, einer Set-Top-Box, die über ein Gateway (GTW), das mit einem physischen Port einer Teilnehmer-Netz-Schnittstelle (UNI) der optischen Netzabschlusseinrichtung verbunden ist, an der optischen Netzabschlusseinrichtung angeschlossen ist, wobei die optische Netzabschlusseinrichtung und das Gateway zwei unabhängige Vorrichtungen bilden, wobei das System ferner einen Autokonfigurationsserver (ACS) umfasst, der eine Überwachung des Gateways (GTW) gemäß Protokoll TR-069 im Verlauf eines ersten Konfigurationspfades (Cc1) auszuführen vermag, bei dem die optische Netzabschlusseinrichtung (ONT) eine virtuelle Teilnehmer-Netz-Schnittstelle (vUNI) umfasst, die zwei Zuständigkeitsbereiche abgrenzt, wobei der erste Zuständigkeitsbereich von einem Zugriffsmanagement-System (AMS) gemäß Protokoll OMCI überwacht wird und der zweite Zuständigkeitsbereich von dem Autokonfigurationsserver (ACS) gemäß Protokoll TR-069 im Verlauf eines zweiten Konfigurationspfades (Cc2) überwacht wird,
wobei das System **dadurch gekennzeichnet ist, dass** der Konfigurationsserver (ACS) ein Software-Update der optischen Netzabschlusseinrichtung (ONT) gemäß Protokoll TR-069 im Verlauf des zweiten Konfigurationspfades (Cc2) durchzuführen vermag.

2. System nach Anspruch 1,
bei dem die virtuelle Teilnehmer-Netz-Schnittstelle der optischen Netzabschlusseinrichtung ein virtueller Ethernet-Schnittstellenpunkt ist.

3. System nach einem der vorhergehenden Ansprüche,
bei dem der Konfigurationsserver (ACS) zur Überwachung einer Filterung des IP-Traffic vom Typ eingehender Broadcast am physischen Port der Teilnehmer-Netz-Schnittstelle der optischen Netzabschlusseinrichtung konfiguriert ist.

4. System nach einem der vorhergehenden Ansprüche,
bei dem der Konfigurationsserver (ACS) zur Überwachung einer Filterung unter Verwendung einer Zugriffskontrollliste (ACL) am physischen Port der Teilnehmer-Netz-Schnittstelle (UNI) der optischen Netzabschlusseinrichtung konfiguriert ist.

5. System nach einem der Ansprüche 1 bis 4,
bei dem die optische Netzabschlusseinrichtung und das Gateway zwei physisch getrennte Vorrichtungen bilden.

6. System nach einem der Ansprüche 1 bis 4,
bei dem die optische Netzabschlusseinrichtung und das Gateway zwei unabhängige Vorrichtungen bilden, die auf ein und derselben Leiterplatte angeordnet sind.

7. Verfahren zur Überwachung eines Kommunikationssystems nach einem der vorhergehenden Ansprüche.

## Claims

1. Communication system comprising optical termination equipment (ONT) of an optical fibre network as far as the house, an internet access box connected to the optical termination equipment by means of a gateway (GTW) connected to a physical user-network interface port (UNI) of the optical termination equipment, the optical termination equipment and the gateway forming two autonomous devices, the system further comprising a configuration server (ACS) suitable for supervising the gateway (GTW) in accordance with the TR-069 protocol along a first configuration path (Cc1),
wherein the optical termination equipment (ONT) integrates a virtual user-network interface (vUNI) delimiting two areas of responsibility, the first area of responsibility being under the supervision of an administration server of the network (AMS) in accordance with the OMCI protocol, and the second area of responsibility being under the supervision of the configuration server (ACS) in accordance with the TR-069 protocol along a second figuration path (Cc2), the system being **characterised in that** the configuration server (ACS) is suitable for performing a software update of the optical termination equipment (ONT) in accordance with the TR-069 protocol along the second configuration path (Cc2).

2. System according to claim 1, in which the virtual user-network interface of the optical termination equipment is a virtual Ethernet interface point.

3. System according to one of the preceding claims, in which the configuration server (ACS) is configured to supervise the implementation of a filtering of the IP traffic of the broadcast type entering at the physical user-network interface port of the optical termination equipment.

4. System according to one of the preceding claims, in which the configuration server (ACS) is configured so as to supervise the implementation of a filtering using an access control list (ACL) at the physical user-network interface port (UNI) of the optical termination equipment.

5. System according to one of claims 1 to 4, in which the optical termination equipment and the gateway form two physically separate devices.

6. System according to one of claims 1 to 4, in which the optical termination equipment and the gateway form two autonomous devices arranged on the same printed circuit card.

7. Method for supervising a communication system according to one of the preceding claims.
